# EUROPEAN PATENT APPLICATION

(11) **EP 4 843 836 A1**
(43) Date of publication of application: **25.11.2026**
(21) Application number: 25178312.2
(22) Date of filing: 22.05.2025
(51) Int. Cl.: B60R 13/00, G09F 21/04, E05B 81/50, H01H 13/06

(54) **DISPLAY ELEMENT FOR A VEHICLE BODYWORK**

(71) Applicant: Minebea Mitsumi Inc., Kitasaku-gun, Nagano 389-0293 (JP)
(72) Inventor: CIUFFARELLA, Barbara, 10044 Pianezza (IT); PEYNOT, Thomas, 10044 PIANEZZA (IT); SHARMA, Jatin, 10044 PIANEZZA (IT)
(74) Representative: Germain Maureau

(57) **Abstract**

The disclosure concerns a display element (3) for a vehicle bodywork (2) characterized in that it comprises:
- a holder (4) configured to be fastened on the vehicle bodywork (2) and defining a recess (41);
- a display part (5) comprising a display side (51) and a support side (52) opposed to said display side (51), the support side (52) of the display part (5) being inserted in the recess (41) of the holder (4);
- a removable fixation part (6) maintaining the support side in the recess (41).

## Description

### TECHNICAL FIELD

The present disclosure concerns a display element for a vehicle bodywork, for example a logo holder forming a push-button for commanding the opening of a vehicle's trunk.

### BACKGROUND

Vehicles, as for example cars, generally comprise a logo of the vehicle manufacturer fastened on the vehicle bodywork. For vehicles like cars, logos are generally installed at the front and at the rear of the vehicle.

In order to highlights the logo of the manufacturer, its known to use logo with integrated lights, or integrated sensor like a logo with a tactile surface.

It is also known to install equipment of the vehicle, as parking camera, in the logo in order to make it more discreet.

However, the integration of electronic components in the logo has created the risk of failure of the electronic components located in the logo.

Therefore, there is a need for solution for mitigating the risk of failure of a component located in the logo, or other display element fastened onto the vehicle bodywork.

### SUMMARY

The invention concerns a display element for a vehicle bodywork characterized in that it comprises:
- a holder configured to be fastened on the vehicle bodywork and defining a recess;
- a display part comprising a display side and a support side opposed to said display side, the support side of the display part being inserted in the recess of the holder;
- a removable fixation part maintaining the support side in the recess.

Such display element offers a solution both with a simple structure and easy to repair in case of a failure of a component. By fastening the display part with a removable fixation part, the display element can be easily dismantled. By removable, it is understood that the fixation part can be removed without any damage or irremediable deformation for any component of the display element.

According to an advantageous feature, the fixation part is clipped on the holder by engagement of a clipping tab of the fixation part in a clipping orifice of the holder.

According to an advantageous feature, the fixation part is clipped on the holder by engagement of a clipping tab of the fixation part in a clipping orifice of the holder. Such fixation by clipping offers a solution both simple and with low risk of unwanted removal.

According to an advantageous feature, the clipping tab comprises an extremity with a retention hook adapted to be inserted in the clipping orifice, the retention hook preventing the separation between the fixation part and the holder. Such hook enables a solution with low risk of unwanted removal and easy to remove by pushing onto the hook.

According to an advantageous feature, the fixation part comprises a surrounding wall forming a portion of an exterior surface of the display element, the surrounding wall presenting an access hole facing the clipping tab and the clipping orifice, the clipping orifice being a through hole such that the clipping orifice opens onto the clipping tab on the one hand, and the clipping orifice opens onto the access hole on the other hand. Such feature enables an easy removal of the fixation part, with a small impact on the aesthetics of the display element.

According to an advantageous feature, the fixation part comprises a removable cap installed on the access hole. Such cap avoids the introduction of water and dust inside the access hole.

According to an advantageous feature, the access hole is located on a bottom side of the display element, the bottom side of the display element being intended to face a reference surface on which the vehicle rolls. Such access hole is less visible for the vehicle user, and thus does not impact the aesthetics of the display element.

According to an advantageous feature, a gasket is located at least partially between the fixation part and the holder. Such gasket limits the introduction of water and dust inside the display element.

According to an advantageous feature, the gasket is located at least partially in the clipping orifice of the holder. Such gasket improves the protection against the introduction of water and dust, the clipping orifice forming a way for the water and the dust for penetrating inside the display element.

According to an advantageous feature, the gasket is maintained in the clipping orifice by the fixation part. Such feature simplifies the display element assembly.

According to an advantageous feature, the gasket comprises a lip configured to be clamped between the fixation part and the bodywork when the display element is fastened on the bodywork. Such feature improves the protection against the introduction of water and dust, the space between the fixation part and the bodywork being a way for the water and dust to penetrate inside the display element.

According to an advantageous feature, the display element comprises an activation device located between the holder and the display part, the display part being mounted mobile in the holder so as to be mobile between an activation position where the support side activates the activation device, and a rest position where the support side does not activate the activation device. Such feature is a simple and easy to repair solution for a display element forming an activation element, like a button or a handle. Indeed, in case of failure of the activation device, the activation device can be easily changed by removing the fixation part and then display part.

According to an advantageous feature, in its activation position the display part abuts against the holder, and in rest position the display part abuts against the fixation part. Such feature is a simple and compact solution.

According to an advantageous feature, the display element comprises a biasing member that tends to keep the display part in its rest position. Such feature is a simple solution for maintaining the display part in its rest position when not activated.

According to an advantageous feature, an electronic component is located in the display part, for example a light-emitting component or a sensor. Such feature enables to add other functions to the display element.

According to an advantageous feature, the display part is in two parts, a first part forming the display side, a second part forming the support side. Such feature simplifies the manufacturing. Moreover, such feature simplifies the access of components placed in the display part.

According to another aspect, the invention concerns a vehicle comprising a bodywork and a display element according to any of the preceding features fastened on the bodywork.

According to an advantageous feature, the gasket is clamped between the bodywork and the fixation part. Such feature improves the protection against the introduction of water and dust.

Further advantages and advantageous features are disclosed in the following description.

### BRIEF DESCRIPTION OF THE DRAWINGS

A possible embodiment of the door handle apparatus will now be described by way of non-limiting examples with reference to the appended figures:
Figure 1 is a rear view of a vehicle comprising a display element;
Figure 2 is an exploded view of the display element of figure 1;
Figure 3 is a cross-sectional view of the display element of figure 2 in which a display part is in rest position;
Figure 4 is a cross-sectional view of the display element of figure 2 in which a display part is in activation position.
Figure 5 is a cross-sectional view of the display element of figure 2 illustrating the removal of a fixation part by insertion of a tool.

### DETAILED DESCRIPTION OF EXAMPLE EMBODIMENTS OF THE INVENTION

In the following description, positioning terms such as front, back, left, right, top, bottom, etc., refer to an orthogonal basis comprising the following three directions: front-back, left-right and top-bottom. In this description, theses three directions correspond to the usual directions attached to the motor vehicle. However, in other embodiments of the invention, the directions front-back, left-right and top-bottom could be any set of arbitrary directions forming an orthogonal basis.

A vehicle 1 comprises a bodywork 2, the bodywork 2 being formed by the external shell of the vehicle 1. The bodywork 2 is for example in metal, or in composite material with fiber-reinforced polymer matrix, or in plastic material. The bodywork 2 can also be made with parts made several materials, for example with parts in metal and/or parts composite material with fiber-reinforced polymer matrix, and/or parts in plastic material.

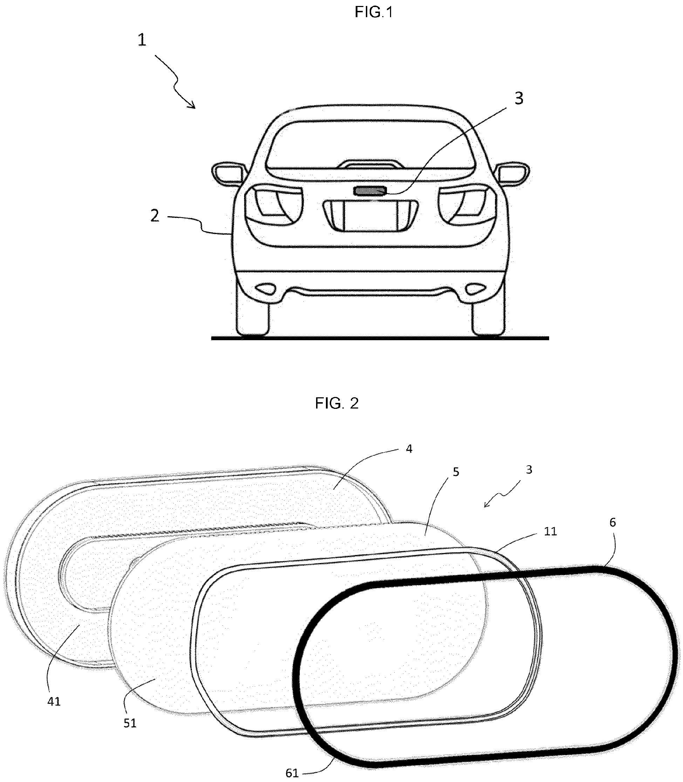

A display element 3 is fastened on the bodywork 2 of the vehicle. In the embodiment presented in figure 1, the display element 3 is fastened on a tailgate of the bodywork 2. However, the display element 3 can be placed in other position on the bodywork 2, for example at the side or at the front. Moreover, more than one display element 3 can be installed on the bodywork 2.

As it can be seen in figures 2 to 4, the display element 3 comprises:
- a holder 4 configured to be fastened on the vehicle bodywork 2 and defining a recess 41;
- a display part 5 comprising a display side 51 and a support side 52 opposed to said display face 51, the support side 52 of the display part 5 being inserted in the recess 41 of the holder 4;
- a removable fixation part 6 maintaining the support side 52 in the recess 41.

The holder 4 is fastened on the vehicle bodywork 2 in order to receive the other parts of the display element 3 and ensure their fixation on the bodywork 2. The holder 4 can be fastened on the bodywork 2 by riveting, or screwing, or by crimping, or by welding, or by gluing, or clipping it on the bodywork 2. The technic used for fastening the holder 4 on the bodywork 2 is adapted in function of the material of the holder 4 and the material of the bodywork 4. For example, the holder 4 is in metal or in plastic material.

The display part 5 is positioned in the holder 4 such that the display side 51 is visible from the outside of the bodywork 2. A logo of the vehicle manufacturer can, for example, be drawn on the display side 51. The display part can be made in one part, or can be made in several parts. According to a preferred variant, the display part 5 is made in two parts 53, 54. A first part 53 of the display part 5 forming the display face 51, a second part 54 forming the support face 52.

The display part 5 can comprises an internal cavity 55. An electronic component 7 can be placed in this internal cavity of the display part 5. The electronic component 7 can comprise a light-emitting component, for example a LED, in order to highlight the display part 5. The display side 51 can comprises one or several translucent zones such that the light emitted by the light-emitting component passes through the display side 51. The electronic component can also comprise a sensor. The sensor can be a camera, for example a parking camera, and the display side can present a hole or a translucent zone for the camera. The sensor can also be a hand detection sensor for detecting when a hand of a user is near or touch the display part 5, the hand detection sensor for example comprises a capacitive sensor and/or a strain sensor.

The fixation part 6 forms an abutment preventing the display part 5 from coming out the holder 4. According to a preferred variant, the fixation part 6 is a collar surrounding the display part 5. An internal diameter of the fixation part 6 is less than an external diameter of the display side 51, such that the edge of the display side 51 abuts against fixation part 6, the center of the display side 51 being not recovered by the fixation part 6 and thus visible. The logo of the car manufacturer can be advantageously drawn in the center of the display side 51, and thus not recovered by the fixation part 6.

The fixation part 6 comprises a surrounding wall 61 forming a portion of the exterior surface of the display element 3 protruding from the bodywork 2. The exterior surface of the display element 3 is the surface visible from the outside of said display element 3. By contrast, an interior surface of the display element 3 is the surface visible from the inside of said display element 3. The rest of the exterior surface of the display element 3 protruding from the bodywork 2 is formed by the display side 51 of the display part 5. The surrounding wall 61 has for example section with a U shape with a hole at its center, such that the display side is visible. The display side 51 can be flush with the surrounding wall 61. The display side 51 can also protrude from the surrounding wall 61.

The fixation part 6 can be fastened on the holder 4 by clipping. In order to clip the fixation part 6 onto the holder 4, the fixation part 6 comprises a clipping tab 62 which engages itself in a clipping orifice 42 made in the holder 4. The engagement of the clipping tab 62 is obtained by insertion of a portion of the clipping tab 62 in the clipping orifice 42. The clipping tab 62 is formed around the circumference of the fixation part 6. The clipping tab 62 can be made by several portions distributed around the circumference of the fixation part 6. The clipping orifice 42 is formed around the circumference of the holder 4. The clipping orifice 42 can be made by several portions distributed around the circumference of the holder 4. The clipping tab 62 protrudes from the surrounding wall 61 of the fixation part 6 in direction of the holder 4.

Clipping tab 62 can comprises an engagement hook 63 with a shape adapted to be inserted in the clipping orifice 42. The hook shape of the clipping tab 62 avoid the fixation part 6 to be removed from the holder 4 without disengagement of the clipping tab 62 from the clipping orifice 42. The clipping tab 62 is flexible, and thus the clipping tab 62 can be disengaged from the clipping orifice by elastic deformation of said clipping tab 62. The fixation part 6 can be in metal or in plastic material.

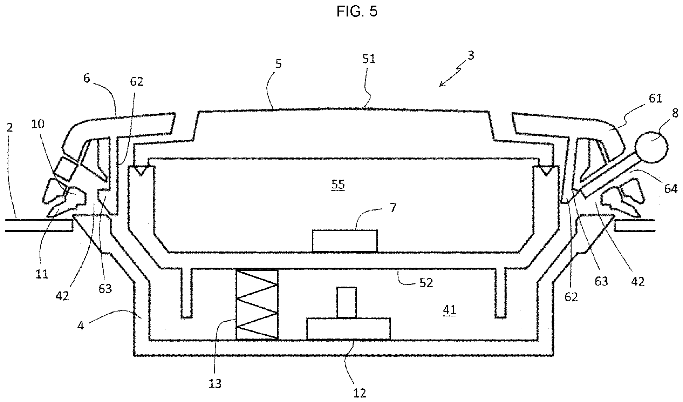

In order to enables an easy removal of the fixation part 6, the surrounding wall 61 presents an access hole 64 opening in face of both the clipping orifice 42 and clipping lip 62. The clipping orifice 42 is a through hole such that said clipping orifice 42 opens onto the clipping tab 62 on the one hand, and the clipping orifice 42 opens onto the access hole 64 on the other hand. The access hole 64 is formed in the fixation part 6 in order to creates a way for the insertion of a tool 8 pushing on the clipping lip 62 to bend said clipping lip 62, as illustrated in figure 5. The bending of the clipping lip 62 by the tool inserted in the access hole 64 remove the engagement 63 from the clipping orifice 42, initiating the unclipping of the fixation part 6 from the holder 4. Then, the fixation part 6 can be removed from the holder 4 by pulling on said fixation part 6. During its insertion, the tool 8 passes through the access hole 64 and the clipping orifice 42 in order to access the clipping lip 62.

The tool 8 can be the key of the vehicle 1 The shape of the access hole 64 is adapted to the tool 8 to introduce. If the tool 8 is the key of the vehicle 1, the shape of the access hole 64 can be complementary to the shape of said the key of the vehicle 1, such that only the key of the vehicle 1 can be introduce in the access hole 64, increasing the security for removing the fixation part 6.

A removable cap 9 is preferably installed in the access hole 64, preventing the introduction of water and dust inside the access hole 64. The removable cap 9 can comprise a lock associated with the key of the vehicle 1, such that the removable cap 9 can be opened only by the key of the vehicle 1.

Preferably, the access hole 64 is made at the bottom side of the surrounding wall 61, such that the access hole 64 is facing of a reference surface on which vehicle 1 is rolling, the surface reference being generally the ground for a car or a truck. By having an access hole 64 facing the ground, such access hole 64 is less visible for the vehicle user, and thus does not impact the aesthetics of the display element 3.

Preferably, a gasket 10 is installed between the fixation part 6 and the holder 4, so as to prevent the introduction of water and dust inside the display element 3. The gasket 10 can be partially located between the fixation part 6 and the holder 4, or the gasket 10 can be integrally located between the fixation part 6 and the holder 4. The gasket 10 is preferably installed in the clipping orifice 42. The gasket 10 can be partially located in the clipping orifice 42, or the gasket 10 can be integrally located in the clipping orifice 42. The gasket 10 is preferably maintained in the clipping orifice 42 by the fixation part 6 pressing onto said gasket 10. The gasket 10 comprises a lip 11 that is clamped between the fixation part 6 and the bodywork 2. Such lip 11 increase the sealing of the display element 3.

According an advantageous variant of the invention, the display element 3, in addition to serving as an aesthetical element, is an activation element for activating a function of the vehicle, as for example a button or a handle. In the embodiment presented in the drawings, the display element 3 is a push-button. The display part 5 is mounted in the holder 4 so as to be able to move between several positions. In the case of a push-button, the display part 5 is able to translate in recess 41 of the holder 4. In case of another activation element, for example a handle, the display part 5 can be able to rotate in the recess of the holder 4. The activation of the display element 3 can be used for example for opening a trunk, a hood, or a door of the vehicle 1.

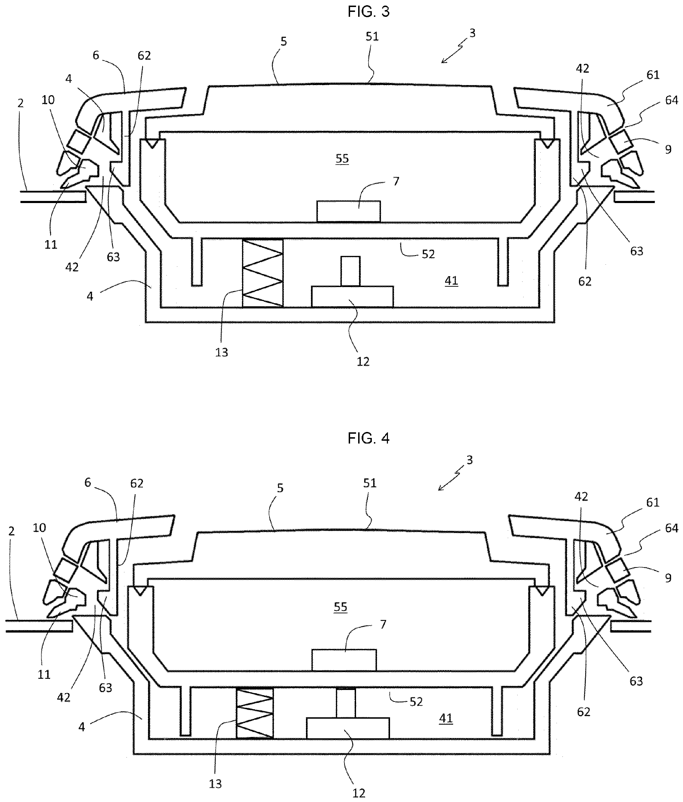

The display element 3 comprises an activation device 12 located in the recess 41 of the holder. The activation device 12 can be located in face of the support side 52 of the display part 5. The display part 5 is mobile between an activation position illustrated on figure 4 where the display part 5 activates the activation device 12, and a rest position illustrated on figures 3 and 5 where the display part 5 does not activate the activation device 12. In the embodiment presented in the drawings, the display part 5 activates the activation device 12 by touching said activation device 12. Thus, in its activation position, the display part 5 is in contact with the activation device 12, and in its rest position the display part 5 is away from the activation device 12. Other kind of activation device can be used. As it can be seen in figures 3 and 4, in its activation position, the display part 5 abuts against the holder 4, and in rest position the display part 5 abuts against the fixation part 6. The activation device 12 is for example a switch, or a strain gauge.

The display element 3 can comprise a biasing element 13 that tends to maintain the display part 5 in its rest position. The biasing element 13 is for example a spring installed in the recess 41 of the holder 4, the spring pushing against the support side 52 of the display part such that the display part 4 abuts against the fixation part 5.

It is to be understood that the present disclosure is not limited to the embodiments described above and illustrated in the drawings; rather, the skilled person will recognize that many changes and modifications may be made within the scope of the appended claims.

## Claims

1. Display element (3) for a vehicle bodywork (2) **characterized in that** it comprises:
- a holder (4) configured to be fastened on the vehicle bodywork (2) and defining a recess (41);
- a display part (5) comprising a display side (51) and a support side (52) opposed to said display side (51), the support side (52) of the display part (5) being inserted in the recess (41) of the holder (4);
- a removable fixation part (6) maintaining the support side in the recess (41).

2. Display element (3) according to claim 1, wherein the fixation part (6) is a collar surrounding the display part (5).

3. Display element (3) according to any of the preceding claims, wherein the fixation part (6) is clipped on the holder (4) by engagement of a clipping tab (62) of the fixation part (6) in a clipping orifice (42) of the holder (4).

4. Display element (3) according to claim 3, wherein the clipping tab (62) comprises an extremity with a retention hook (63) adapted to be inserted in the clipping orifice (42), the retention hook (63) preventing the separation between the fixation part (6) and the holder (4).

5. Display element (3) according to any of the preceding claims, wherein the fixation part (6) comprises a surrounding wall (61) forming a portion of an exterior surface of the display element (3), the surrounding wall (61) presenting an access hole (64) facing the clipping tab (62) and the clipping orifice (42), the clipping orifice (42) being a through hole such that the clipping orifice (42) opens onto the clipping tab (62) on the one hand, and the clipping orifice (42) opens onto the access hole (64) on the other hand.

6. Display element (3) according to claim 5, wherein the fixation part (6) comprises a removable cap (9) installed on the access hole (64).

7. Display element (3) according to any of the preceding claims, wherein a gasket (10) is located at least partially between the fixation part (6) and the holder (4).

8. Display element (3) according to claim 7, wherein the gasket (10) is located at least partially in the clipping orifice (42) of the holder (4).

9. Display element (3) according to claim 7 or claim 8, wherein the gasket (10) comprises a lip (11) configured to be clamped between the fixation part (6) and the bodywork (2) when the display element (3) is fastened on the bodywork (2).

10. Display element (3) according to any of the preceding claims, wherein the display element (3) comprises an activation device (12) located between the holder (4) and the display part (5), the display part (5) being mounted mobile in the holder (4) so as to be mobile between an activation position where the support side (52) activates the activation device (12), and a rest position where the support side (52) does not activate the activation device (12).

11. Display element (3) according to claim 10, wherein in its activation position the display part (5) abuts against the holder (4), and in rest position the display part (5) abuts against the fixation part (6).

12. Display element (3) according to claim 10 or claim 11, wherein the display element (3) comprises a biasing member (13) that tends to keep the display part (5) in its rest position.

13. Display element (3) according to any of the preceding claims, wherein an electronic component (7) is located in the display part (5), for example a light-emitting component or a sensor.

14. Display element (3) according to any of the preceding claims, wherein the display part (5) is in two parts, a first part forming the display side (51), a second part forming the support side (52).

15. Vehicle (1) comprising a bodywork (2) and a display element (3) according to any of the preceding claims fastened on the bodywork (2).
